# EUROPÄISCHE PATENTSCHRIFT

(11) **EP 1 414 223 B1**
(45) Veröffentlichungstag und Bekanntmachung des Hinweises auf die Patenterteilung: **17.12.2008**
(21) Anmeldenummer: 02023834.1
(22) Anmeldetag: 23.10.2002
(51) Int. Cl.: H04M 1/27, G10L 15/22

(54) **Texteingabe für ein Endgerät**
Text entry for a terminal
Saisie de texte pour un terminal

(43) Veröffentlichungstag der Anmeldung: 28.04.2004
(73) Patentinhaber: Continental Automotive GmbH, 30165 Hannover (DE)
(72) Erfinder: Harengel, Steffen, 80689 München (DE); Kunstmann, Niels, Dr., 85540 Haar (DE)

(56) Entgegenhaltungen:
- EP-A- 1 187 431
- WO-A-00/28527
- WO-A-02/077975
- DE-A- 10 017 417
- DE-A- 19 959 903
- GB-A- 2 344 912

## Beschreibung

Die Erfindung betrifft ein Texteingabeverfahren für ein Endgerät, insbesondere ein mobiles Endgerät der Kommunikationstechnik.

Ein solches Kommunikationsendgerät kann beispielsweise durch ein Mobiltelefon, und vorzugsweise durch ein sogenanntes Uhren-Handy realisiert sein. Zur Eingabe von Texten, beispielsweise Kurznachrichten beziehungsweise SMS-Texten (Short Message Service), auf Geräten mit nur wenigen Tasten bietet sich die Eingabe per Sprache als natürlichstes Kommunikationsmedium besonders an. Da bei der Freitexteingabe die benötigten Wortschätze zum Diktieren sehr groß sind, solche Geräte aber üblicherweise nur über geringe Ressourcen verfügen; empfiehlt sich das Buchstabieren zur Eingabe beziehungsweise unterstützenden Eingabe von kurzen Texten.

Die Gestaltung der Benutzerschnittstelle beziehungsweise Bedienoberfläche des Endgerätes ist von entscheidender Bedeutung für die Effizienz der Eingabe. Besonders schwierig ist dies beim Vorhandensein von nur wenigen Tasten auf dem Endgerät, wie beispielsweise dem Uhren-Handy.

Aus der WO 02/077975 ist ein Texteingabeverfahren bekannt, bei dem aus gesprochenen Lauten durch Vergleich mit in einer Datenbank abgespeicherten Schlüsselwörtern eine Wortauswahl getroffen wird, wobei der Benutzer eine Übernahme eines ausgewählten Wortes quittieren muss,

Der Erfindung liegt die Aufgabe zugrunde, eine Texteingabe bei einem eingangs genannten Gerät mit nur wenigen,Tasten zu ermöglichen.

Diese Aufgabe wird erfindungsgemäß durch die im Patentanspruch angegebenen Merkmale gelöst.

Im Folgenden wird die Erfindung anhand eines in der Zeichnung dargestellten Ausführungsbeispieles beschrieben.

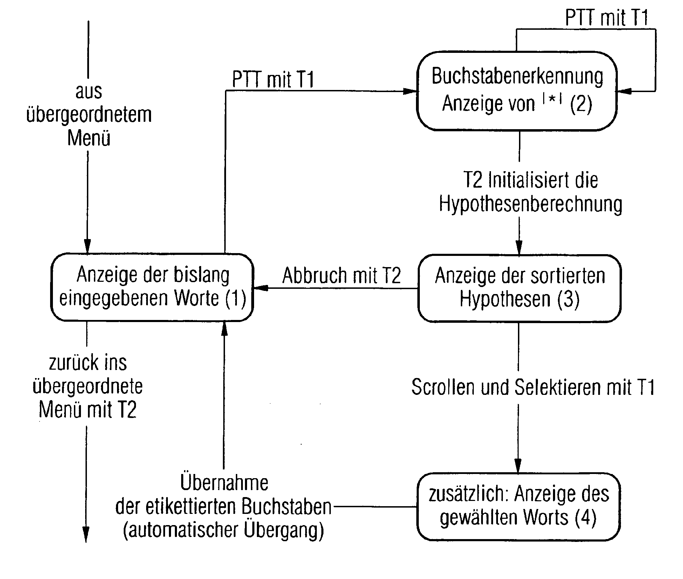

In der einzigen Figur 1 ist ein Ablaufdiagramm zur Erläuterung des erfindungsgemäßen Texteingabeverfahrens dargestellt. Ausgegangen wird bei dem erfindungsgemäßen Texteingabeverfahren von einem Endgerät mit einer Anzeigeeinrichtung, mindesten zwei Tasten T1 und T2 sowie einem Spracherkenner zur Buchstabenerkennung.

Wie aus Figur 1 ersichtlich wird eine Buchstabenerkennung, beispielsweise aus einem übergeordneten Menü, aufgerufen. Man befindet sich dann in einem Zustand (1), in dem die bisher eingegebenen Worte der Textnachricht angezeigt wurden. In diesem Zustand ist die Taste T1 als sogenannte PTT-Taste (Push-To-Talk) und die Taste T2 als Abbruchtaste konfiguriert. Nach einem Druck auf die Taste T1 ist das Zeitfenster für die Buchstabenerkennung für eine vorgegebene Zeit geöffnet. Hierbei erwartet das Endgerät, dass ein Buchstabe diktiert wird, zeigt aber nur das Zeichen "*" als Information über die Anzahl der bisher diktierten Buchstaben für dieses Wort an (2).

Bei einer Variante der Erfindung kann statt des Sternes auch direkt die jeweils beste Hypothese für den erkannten Buchstaben dem Benutzer angezeigt werden.

Je nach Anzahl der Buchstaben in dem gewünschten Wort wird die Taste T1 entsprechend oft gedrückt. Bei einer möglichen Variante hierzu kann die Taste T1 auch während der Buchstabiereingabe permanent gedrückt gehalten werden.

Ein Tastendruck auf die Taste T2 initialisiert die Ausgabe des zur Buchstabeneingabe gehörenden Wortes.

Hierzu wird beispielsweise durch eine sogenannte Hypothesenberechnung aus den Buchstabenwahrscheinlichkeiten das Wort beziehungsweise die vermuteten Worte als n-Bestliste gewonnen. Dabei werden für alle aufgesprochenen Buchstaben die gelieferten Wahrscheinlichkeiten für alle Hypothesen für die Wörter aus einer Hintergrunddatenbank ausgewertet. Die Einzelheiten der verwendeten Spracherkennung sind für die Erfindung von untergeordneter Bedeutung.

Wiederum mit der Taste T1, die hierzu beispielsweise als sogenannter Softkey ausgestaltet ist, ist ein Scrollen innerhalb dieser Liste möglich, sowie eine Auswahl des gewünschten Wortes. Dieses Wort wird dann zusätzlich zu den bisher eingegebenen auf der Anzeigeeinrichtung dargestellt ((4) und (1)).

## Patentansprüche

1. Texteingabeverfahren für ein insbesondere mobiles Endgerät mit einer Anzeigeeinrichtung, mindestens zwei Tastenfunktionen (T1,T2) und einen Spracherkenner, bei dem
- jeweils mit der ersten Tastenfunktion (T1) der Spracherkenner für eine Folge von Buchstabenerkennungen aktiviert wird,
- mit der zweiten Tastenfunktion (T2) an einem Wortende aus Buchstaben-Erkennungswahrscheinlichkeiten eine oder mehrere Worthypothesen als n-Bestliste gewonnen und dargestellt wird, und
- mit der ersten Tastenfunktion (T1) eine Auswahl in der n-Bestliste und eine Übernahme dieses Wortes in den Text erfolgt.

## Claims

1. Text input method for an, in particular, mobile terminal having a display device, at least two key functions (T1, T2) and a voice recognition unit, in which
- the first key function (T1) is respectively used to activate the voice recognition unit for a series of letter recognition operations,
- the second key function (T2) is used to obtain and display one or more word suppositions as an n-best list at the end of a word from letter recognition probabilities, and
- the first key function (T1) is used to make a selection in the n-best list and to transfer this word to the text.

## Revendications

1. Procédé de saisie de texte pour un terminal, notamment mobile, comprenant un dispositif d'affichage, au moins deux fonctions ( T1, T2 ) de touche et un dispositif de reconnaissance vocale, dans lequel
- on active respectivement par la première fonction ( T1) de touche le dispositif de reconnaissance vocale pour une succession de reconnaissances de caractères,
- on obtient par la deuxième fonction ( T2 ) de touche sur une extrémité de mot, à partir de probabilités de reconnaissance de caractères, une ou plusieurs hypothèses de mots sous la forme d'une liste N-Best et on la représente, et
- on effectue par la première fonction ( T1 ) de touche une sélection dans la liste N-Best et on effectue une prise de ce mot dans le texte.
